# EUROPÄISCHE PATENTANMELDUNG

(11) **EP 4 545 281 A1**
(43) Veröffentlichungstag der Anmeldung: **30.04.2025**
(21) Anmeldenummer: 23205295.1
(22) Anmeldetag: 23.10.2023
(51) Int. Cl.: B29C 65/48, B29C 65/50, F03D 1/06, B29L 31/08

(54) **VERFAHREN ZUM HERSTELLEN EINES WINDENERGIEANLAGEN-ROTORBLATTES**

(71) Anmelder: Wobben Properties GmbH, 26607 Aurich (DE)
(72) Erfinder: Raap-Mannott, Markus, 26607 Aurich (DE)
(74) Vertreter: Eisenführ Speiser

(57) **Zusammenfassung**

Die Erfindung betrifft ein Verfahren zum Herstellen eines Windenergieanlagen-Rotorblattes (200), welches eine erste und zweite Halbschale (210, 220) aufweist. Das Verfahren umfasst ein Herstellen der ersten Halbschale (210) und der zweiten Halbschale (220), ein Vorsehen eines Klebewinkels (230) mit einer Mehrzahl von Löchern (231) zum Verbinden der ersten und zweiten Halbschale (210, 220), wenn diese beiden aufeinander platziert sind, ein Verkleben eines Abschnitts des Klebewinkels (230) mit der ersten oder zweiten Halbschale (210, 220) mittels eines Klebers (240), ein Einführen von ersten Enden (410) einer Mehrzahl von Zugspannern (400) durch die Löcher (231) in dem Klebewinkel (230), ein Vorsehen von ersten Knoten (411) oder Schlaufen (412) an den ersten Enden (410) der Zugspanner (400), ein Einführen von zweiten Enden (420) der Mehrzahl von Zugspannern (400) durch Löcher in der ersten oder zweiten Halbschale (210, 220), so dass die zweiten Enden (420) von außerhalb der ersten und zweiten Halbschale zugänglich sind, ein Vorsehen von zweiten Knoten (421) oder Schlaufen (422) an den zweiten Enden (420) der Zugspanner (400), und ein Vorspannen der zweiten Enden (420) der Zugspanner (400) mittels Spannwerkzeuge (500) außerhalb der ersten und zweiten Halbschalen (210, 220) bis der Kleber (240) ausreichend ausgehärtet ist.

Die Erfindung betrifft ferner eine Verwendung eines Gewebebandes als Zugspanner und ein Windenergieanlagen-Rotorblatt (200).

## Beschreibung

Die vorliegende Erfindung betrifft ein Verfahren zum Herstellen eines Windenergieanlagen-Rotorblattes.

Rotorblätter einer Windenergieanlage bestehen typischerweise aus zwei Halbschalen, welche aufeinander platziert und verklebt werden, um ein Windenergieanlagen-Rotorblatt zu erhalten. Da die Rotorblätter einer Windenergieanlage ständig unterschiedlichen Witterungsbedingungen ausgesetzt sind, muss die Verklebung der beiden Halbschalen äußerst robust ausgestaltet sein. Auf der anderen Seite muss bei der Herstellung von Rotorblättern einer Windenergieanlage auf die Herstellungskosten geachtet werden.

Es ist daher eine Aufgabe der vorliegenden Erfindung, ein Verfahren zum Herstellen eines Windenergieanlagen-Rotorblattes vorzusehen, welches robust ausgestaltet ist, ohne die Herstellungskosten zu sehr nach oben zu treiben.

Diese Aufgabe wird durch ein Verfahren zum Herstellen eines Windenergieanlagen-Rotorblattes nach Anspruch 1 gelöst.

Somit wird ein Verfahren zum Herstellen eines Windenergieanlagen-Rotorblattes vorgesehen. Das Rotorblatt weist eine erste und zweite Schale, nämlich eine Druckseitenschale und eine Saugseitenschale, auf. Die beiden Schalen werden unabhängig voneinander hergestellt und müssen miteinander verklebt werden. Dazu wird mindestens ein Klebewinkel vorgesehen, welcher sowohl mit der Saugseitenhalbschale als auch mit der Druckseitenhalbschale zu verbinden ist, wenn diese beiden aufeinander platziert sind. Ein Abschnitt des Klebewinkels ist somit beispielsweise mittels eines Klebers mit der ersten Halbschale (z.B. Saugseite) verbunden und ein anderer Abschnitt des Klebewinkels ist mit der zweiten Halbschale (z.B. Druckseite) verbunden.

Bei der Herstellung des Rotorblattes wird der Klebewinkel zunächst an einer der beiden Halbschalen beispielsweise mittels eines Klebers befestigt. Ferner wird eine Mehrzahl von Zugspannungseinheiten nämlich Zugspanner an dem Klebewinkel befestigt. Insbesondere ein Ende einer Zugspannungseinheit wird an der Innenseite des Klebewinkels befestigt. Das zweite Ende der Zugspannungseinheit wird auf der Außenseite der Schale derart platziert, dass es von außen zugänglich ist. An der ersten Seite der Zugspannungseinheit kann ein Knoten oder eine Schlaufe ausgebildet sein, um ein Durchrutschen des ersten Endes der Zugspannungseinheit zu vermeiden. An dem zweiten Ende (an der Außenseite) kann das zweite Ende der Zugspannungseinheit einen Knoten oder eine Schlaufe aufweisen, welche mittels eines Spannwerkzeugs verspannt werden können. Damit kann der Klebewinkel von innen gegen die erste und zweite Schale auf Zug angedrückt werden. Die Zugspannung kann gehalten werden, bis der Kleber ausreichend durchgetrocknet ist.

Gemäß einem Aspekt kann die Zugspannungseinheit ein Gewebebang (z.B. ein Umreifungsband) aufweisen, an dessen erstem Ende ein Knoten oder eine Schlaufe und an dessen zweitem Ende ebenfalls ein Knoten oder eine Schlaufe ausgebildet ist, wobei das zweite Ende mittels der Spanneinheit dazu verwendet werden kann, um das Umreifungsband gegen den Klebewinkel vorzuspannen.

Die Verwendung eines Gewebebands (z.B. ein Umreifungsband) als Zugspanner ist vorteilhaft, weil dieses nicht leitfähig ist und damit den Blitzschutz des Rotorblattes nicht negativ beeinflusst. Ferner kann die Zugspannungseinheit nach Herstellung des Rotorblattes im oder am Rotorblatt verbleiben. Damit wird eine einfache, sichere und kostengünstige Möglichkeit der Verklebung der beiden Halbschalen mittels eines vorgespannten Klebewinkels erreicht.

Die Erfindung betrifft ebenfalls eine Verwendung eines Gewebebands (z.B. ein Umreifungsband) als Zugspanner, um einen Klebewinkel an oder zwischen einer ersten und einer zweiten Halbschale beim Verkleben der Halbschale auf Spannung bezüglich der beiden Halbschalen zu halten.

Durch die Verwendung des Umreifungsbandes ist es möglich, den Klebewinkel von außen bezüglich der beiden Halbschalen während des Verklebens der beiden Halbschalen vorzuspannen.

Da das Umreifungsband nicht elektrisch leitfähig ist, kann das Band nach der erfolgten Verklebung der zwei Halbschalen in dem Rotorblatt verbleiben. Beispielsweise kann ein nach außen ragendes Ende des Umreifungsbandes einfach abgeschnitten werden und der Rest des Umreifungsbandes, insbesondere das erste Ende, welches in Kontakt mit dem Klebewinkel ist, kann in dem Rotorblatt verbleiben, da es dort nicht zu einer Beeinträchtigung des Rotorblattes führt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Ansicht einer Halbschale des Rotorblattes mit einem Klebewinkel während der Herstellung des Rotorblattes,
- Fig. 3: zeigt eine vergrößerte Darstellung von zwei aufeinander platzierten Halbschalen zusammen mit einem Klebewinkel,
- Fig. 4: zeigt eine schematische Darstellung der Montage eines Klebewinkels,
- Fig. 5A: zeigt eine schematische Darstellung eines Klebewinkels, welcher mittels mehrerer Zugspanner vorgespannt ist,
- Fig. 5B: zeigt ein zweites Ende eines Zugspanners von Fig. 5A,
- Fig. 6A: zeigen jeweils eine schematische Ansicht eines Spannwerkzeuges mit
- und 6B: einem zweiten Ende eines Zugspanners,
- Fig. 7A und 7B: zeigen verschiedene Ansichten eines Spannwerkzeuges sowie eines Endes eines Zugspanners,
- Fig. 8: zeigt eine weitere schematische Darstellung eines Zugspanners,
- Fig. 9: zeigt eine schematische Darstellung eines Gewebebandes mit einer Schlaufe, und
- Fig. 10: zeigt eine schematische Darstellung eines ersten Endes eines Zugspanners.

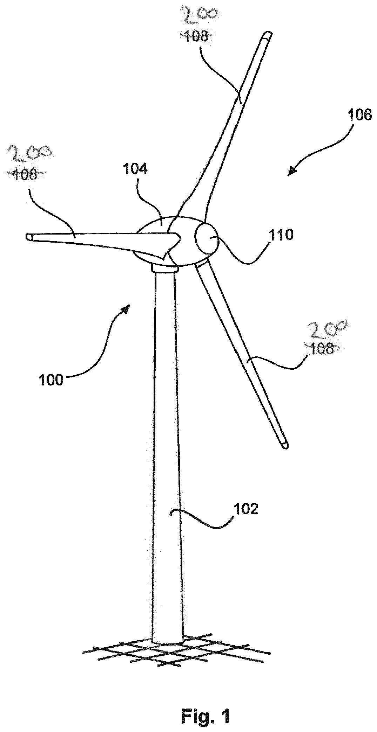

Fig. 1 zeigt eine schematische Darstellung einer Windenergieanlage 100. Die Windenergieanlage 100 weist einen Turm 102, eine Gondel 104 auf dem Turm 102 und einen Spinner 110 nebst einem aerodynamischen Rotor 106 auf. Der aerodynamische Rotor 106 weist drei Rotorblätter 200 auf, welche durch Interaktion mit einem vorherrschenden Wind in Rotation versetzt werden. Der aerodynamische Rotor ist mit einem elektrischen Generator (nicht gezeigt) gekoppelt, welcher bei Drehung elektrische Energie erzeugt.

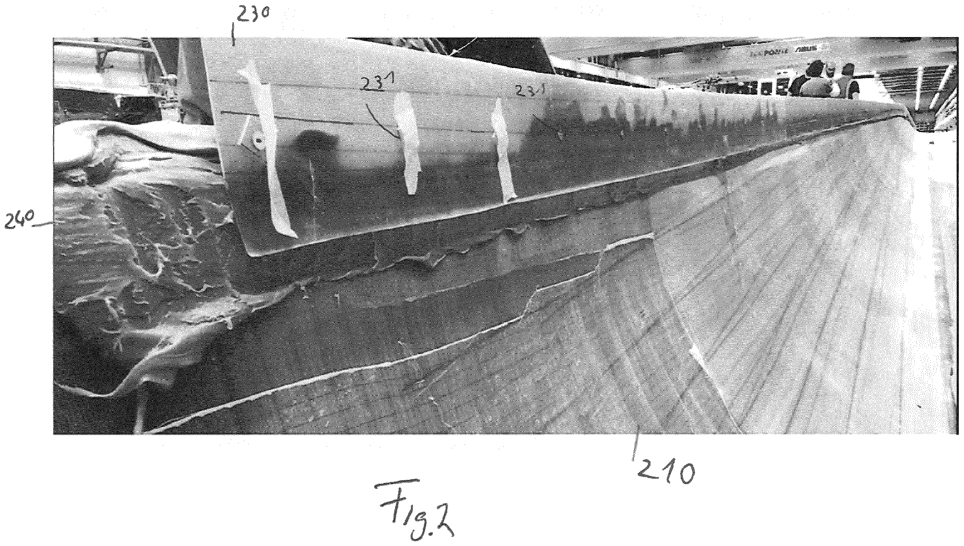

Fig. 2 zeigt eine schematische Ansicht einer Halbschale eines Rotorblattes mit einem Klebewinkel während der Herstellung des Rotorblattes. Das Rotorblatt 200 weist eine erste Halbschale 210 auf, welche mit einer zweiten (nicht gezeigten) Halbschale verbunden werden muss, um das Rotorblatt 200 auszugestalten. Hierzu ist ein Klebewinkel 230 vorgesehen, welcher mittels eines Klebstoffes 240 an der ersten Rotorblattschale 210 verklebt wird. In Fig. 2 ist lediglich die eine Rotorblattschale 210 gezeigt, bevor eine zweite Rotorblattschale darauf platziert wird. Die beiden Rotorblattschalen 210, 220 werden mittels des Klebewinkels 230 und des Klebstoffes 240 miteinander befestigt. Der Klebewinkel 230 kann eine Mehrzahl von Löchern oder Durchgangsbohrungen 231 aufweisen. Diese Löcher 231 können dazu verwendet werden, Zugelemente, nämlich Zugspanner aufzunehmen, um den Klebewinkel 230 gegen die zwei Halbschalen 210, 220 vorzuspannen, bis der Klebstoff 240ausreichend ausgehärtet ist.

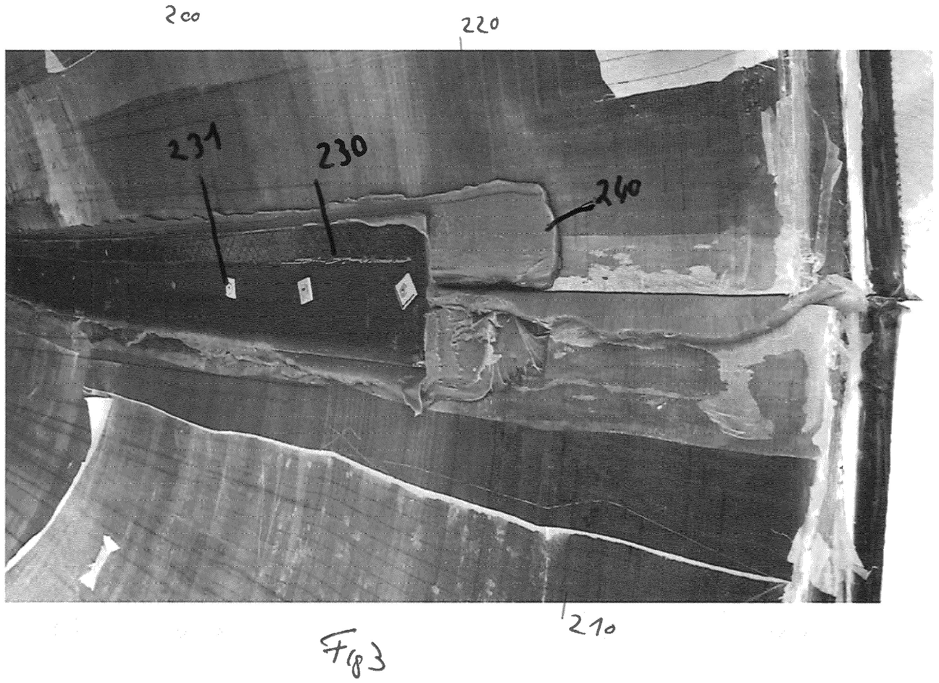

Fig. 3 zeigt eine vergrößerte Darstellung von zwei aufeinander platzierten Halbschalen zusammen mit einem Klebewinkel. In Fig. 3 ist ein Rotorblatt 200 mit einer ersten und zweiten Halbschale 210, 220 gezeigt, welche aufeinander platziert sind. Zur dauerhaften Befestigung der beiden Halbschalen 210, 220 aneinander wird mindestens ein Klebewinkel 230 sowie ein Klebstoff 240 verwendet. Der Klebstoff 240 wird zwischen den Auflageflächen der ersten und zweiten Halbschale 210, 220 sowie zwischen dem Klebewinkel 230 und der ersten und zweiten Halbschale 210, 220 vorgesehen.

Der Klebewinkel 230 weist eine Mehrzahl von Löchern oder Durchgangsbohrungen 231 auf. Diese werden dazu verwendet, Zugspanner aufzunehmen, um den Klebewinkel 230 gegenüber den beiden Halbschalen 210, 220 während der Aushärtung des Klebstoffs 240 vorzuspannen.

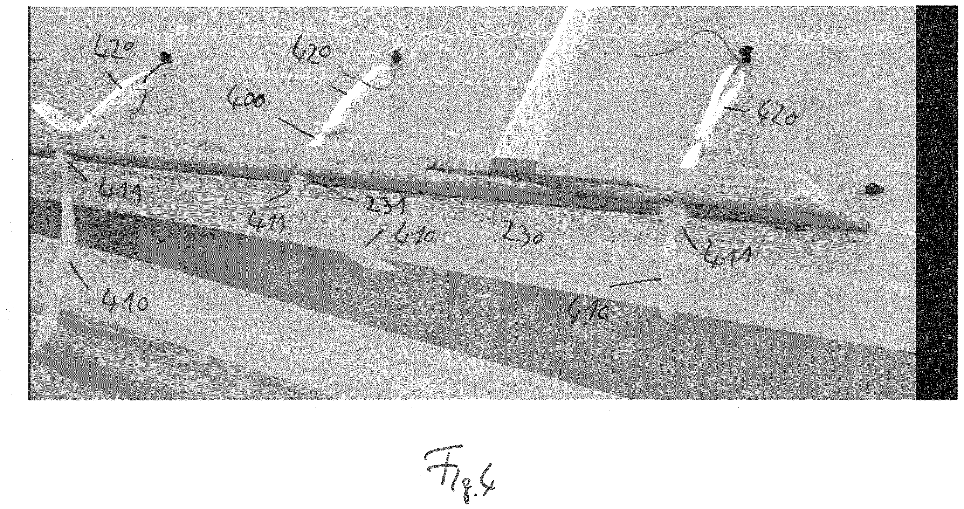

Fig. 4 zeigt eine schematische Darstellung einer Montage eines Klebewinkels. Der Klebewinkel 230 weist eine Mehrzahl von Löchern oder Durchgangsbohrungen 231 auf. Gemäß der Erfindung wird eine Mehrzahl von Zugspannern 400 vorgesehen, um den Klebewinkel gegenüber den beiden Halbschalen vorzuspannen, bis der Klebstoff 240 ausgehärtet ist.

Die Zugspanner 400 weisen jeweils ein erstes und zweites Ende 410, 420 auf. Ein erstes Ende 410 kann durch die Löcher 231 hindurchgeführt werden und anschließend kann ein Knoten 411 in dem ersten Ende 410 gemacht werden. Damit kann verhindert werden, dass das erste Ende 410 durch die Löcher 231 hindurchgezogen werden kann. An dem zweiten Ende 420 kann ein Knoten 421 oder eine Schlaufe 422 vorgesehen sein. Das zweite Ende 420 kann durch Löcher oder Durchgangsbohrungen in den Halbschalen nach außen gezogen werden, so dass das erste Ende 410 aus den Löchern 231 der Klebewinkel hinausragt und die zweiten Enden 420 können durch die Löcher in den Halbschalen hindurchgezogen werden, so dass die zweiten Enden 420 außen an den Halbschalen hinausragen. Damit sind die zweiten Enden 420 von außerhalb der Halbschalen zugänglich, so dass eine Vorspannung erfolgen kann, so dass der Klebewinkel 230 nebst Klebstoff 240 gegen die beiden aufeinander platzierten Halbschalen 210, 220 gedrückt wird. Dies kann so lange erfolgen, bis der Klebstoff 240 ausreichend ausgehärtet ist.

Der Zugspanner kann an seinem ersten und zweiten Ende 410, 420 jeweils einen Knoten 411, 421 oder eine Schlaufe 412, 422 aufweisen.

Vorzugsweise ist der Zugspanner als ein flexibles Gewebeband, beispielsweise in Form eines Umreifungsbandes ausgestaltet.

Die Verwendung eines Umreifungsbandes ist vorteilhaft, da dieses Band nicht elektrisch leitfähig ist und damit können die Zugspanner 400 sich nicht negativ auf den Blitzschutz der Windenergieanlage auswirken. Daher ist es möglich, die Zugspanner, nachdem der Klebstoff 240 ausgehärtet ist und die beiden Halbschalen 210, 220 aufeinander platziert sind, nicht aus dem Rotorblatt 200 zu entfernen, sondern in dem Rotorblatt 200 zu lassen.

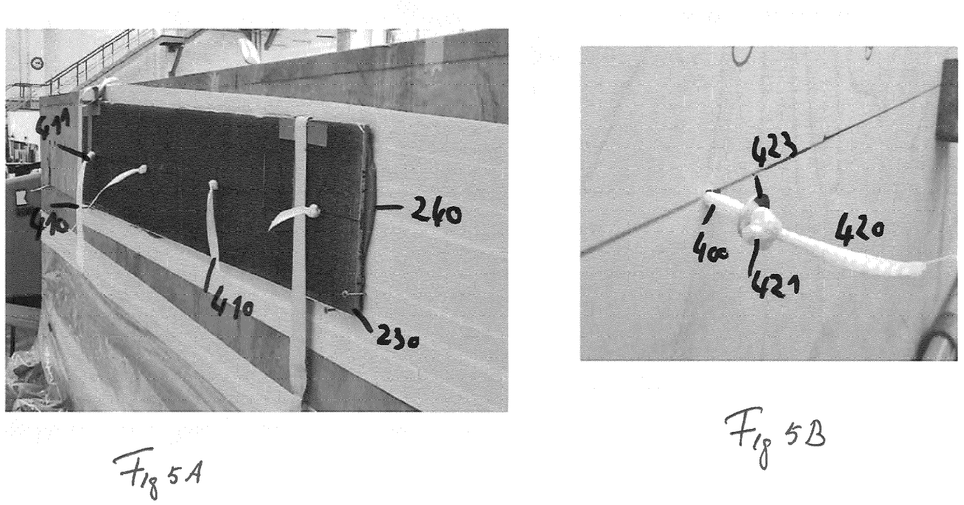

Fig. 5A zeigt eine schematische Darstellung eines Klebewinkels, welcher mit mehreren Zugspannern vorgespannt ist und Fig. 5B zeigt ein zweites Ende der Zugspanner von Fig. 5A. Der Klebewinkel 230 wird an der Innenseite der beiden Halbschalen platziert. Der Klebewinkel 230 weist eine Mehrzahl von Löchern oder Durchgangsbohrungen 231 auf. Zum Vorspannen des Klebewinkels 230 an den beiden Halbschalen 210, 220 werden eine Mehrzahl von Zugspannern 400 mit einem ersten und zweiten Ende 410, 420 vorgesehen. Die ersten Enden 410 befinden sich auf der Innenseite des Klebewinkels und die zweiten Enden 420 befinden sich an der Außenseite der zwei Halbschalen. An dem ersten Ende 410 kann ein Knoten 411 oder eine Schlaufe 412 vorgesehen sein. Beim Verspannen der Zugspanner 400 liegen die Knoten 411 in bzw. an den Löchern 231 an und verschließen diese. An der Außenseite, das heißt, am zweiten Ende 420 der Zugspanner, kann ein Knoten 421 vorgesehen sein. Optional kann eine Unterlegscheibe 423 zwischen dem Knoten und der Außenseite der beiden Halbschalen vorgesehen sein. Alternativ dazu kann an dem zweiten Ende 420 eine Schlaufe 422 vorgesehen sein.

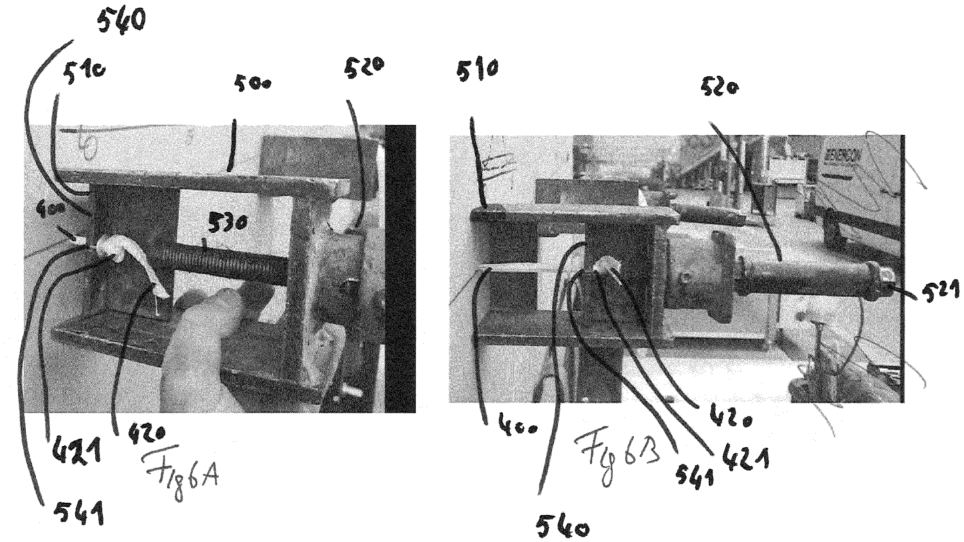

Fig. 6A und 6B zeigen jeweils eine schematische Ansicht eines Spannwerkzeugs mit einem zweiten Ende eines Zugspanners. Das zweite Ende 420 des Zugspanners 400 ragt über die zwei Halbschalen nach außen hinaus, so dass das zweite Ende 420 beispielsweise mit dem Knoten 421 von außen zugänglich ist. Dazu wird ein Spannwerkzeug 500 mit einem ersten und zweiten Ende 510, 520 vorgesehen. Das erste Ende 510 wird an einer Außenseite der Halbschalen 210, 220 platziert. Das Spannwerkzeug 500 weist ferner beispielsweise eine Gewindestange 530 und einen Aufnahmeabschnitt 540 beispielsweise mit einem Schlitz 541 auf. Das zweite Ende 420 beispielsweise mit dem Knoten 421 kann in dem Schlitz 441 platziert sein.

An dem zweiten Ende 520 des Spannwerkzeugs kann ein beispielsweise Sechskantanschluss 521 vorgesehen sein. Durch Drehen dieses Anschlusses 521 kann die Gewindestange 530 und damit der Abschnitt 540 bewegt werden. Durch Betätigung des Anschluss 521 kann somit das zweite Ende 420 gegenüber der Außenseite der Halbschalen vorgespannt werden. Damit erfolgt ebenfalls eine Vorspannung des ersten Endes 410 sowie des Klebewinkels 230. In Fig. 6B ist gezeigt, wie das zweite Ende 420 des Zugspanners in dem Spannwerkzeug vorgespannt ist.

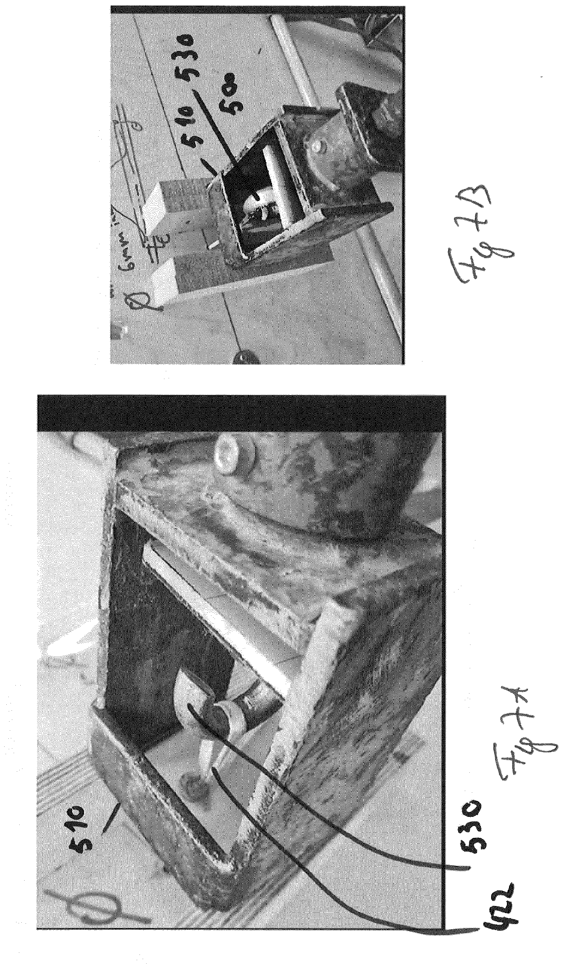

Fig. 7A und 7B zeigen jeweils verschiedene Ansichten eines Spannwerkzeugs sowie eines Endes des Zugspanners. Das Spannwerkzeug kann dem Spannwerkzeug von Fig. 6 entsprechen, wobei lediglich ein Haken 550 vorgesehen ist. Die zweiten Enden 420 der Zugspanner 400 können als Schlaufe 422 ausgestaltet sein. Die Schlaufe 422 kann in den Haken 550 eingehängt werden und der Zugspanner 400 kann mittels des Hakens vorgespannt werden.

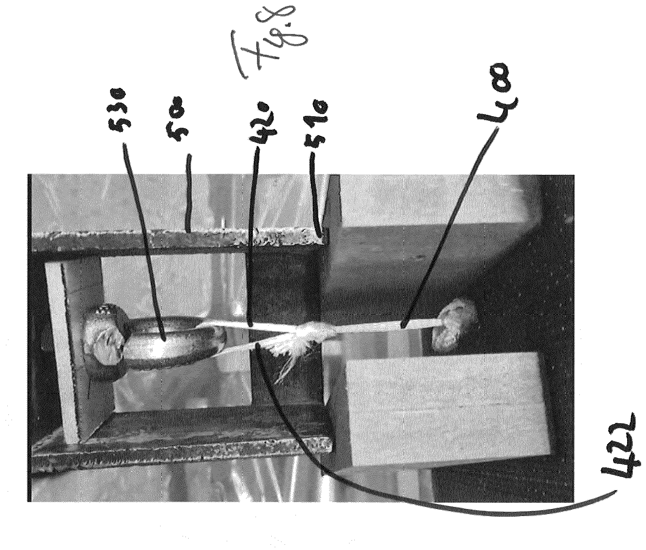

Fig. 8 zeigt eine weitere schematische Darstellung eines Zugspanners. In Fig. 8 ist das Spannwerkzeug 500 auf zwei Holzklötzen platziert und ein zweites Ende des Zugspanners weist eine Schlaufe 422 auf, welche in den Haken 550 eingelegt ist. Durch Betätigung des zweiten Endes 520 kann die Entfernung zwischen dem Haken 530 und der Außenseite der Halbschalen 210, 220 vergrößert werden, wodurch der Zugspanner 400 vorgespannt ist. Da die ersten Enden 410 der Zugspanner 400 in den Löchern 231 des Klebewinkels 230 vorgesehen sind, führt dies auch zu einer Vorspannung des Klebewinkels 230 gegenüber den zwei Halbschalen 210, 220.

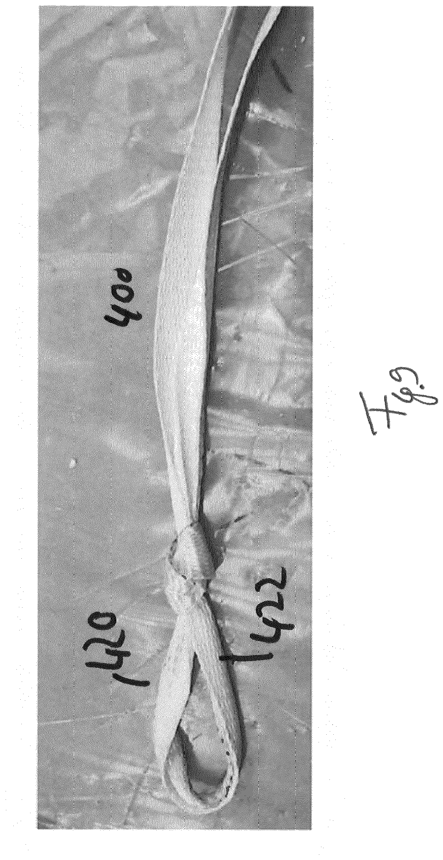

Fig. 9 zeigt eine schematische Darstellung eines Gewebebandes mit einer Schlaufe. Der Zugspanner 400 kann beispielsweise als ein Umreifungsband ausgestaltet sein. Das erste oder zweite Ende 410, 420 kann eine Schlaufe 412, 422 aufweisen.

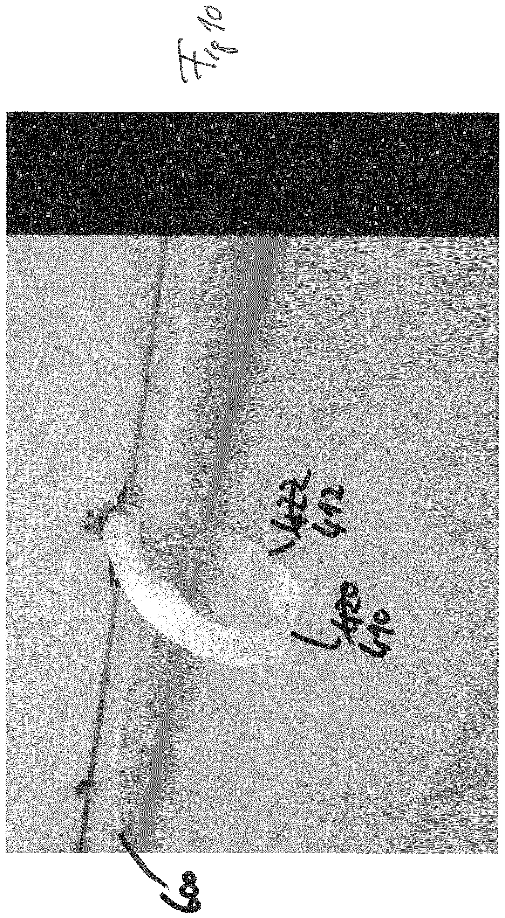

Fig. 10 zeigt eine schematische Darstellung eines ersten Endes eines Zugspanners. Optional kann ein erstes Ende 410 der Zugspanner 400 als Schlaufe ausgestaltet sein. Zur Erzeugung einer Vorspannung für den Klebewinkel 230 kann ein Stab 600 durch die Schlaufen 412 am ersten Ende geführt werden. Anschließend können die Zugspanner 400 mittels deren zweiten Enden 420, welche sich an der Außenseite der ersten und zweiten Halbschale befinden, vorgespannt werden. In Fig. 10 ist insbesondere die Variante dargestellt, bei welcher die ersten Enden 410 als Schlaufen 412 ausgestaltet sind. Dies ist eine einfache Ausgestaltung, da es nicht nötig ist, einen Knoten an dem ersten Ende des Zugspanners vorzusehen.

### Bezugszeichenliste

- 100: Windenergieanlage
- 102: Turm
- 104: Gondel
- 106: Rotor
- 110: Spinner
- 200: Rotorblatt
- 210: erste Halbschale
- 220: zweite Halbschale
- 230: Klebewinkel
- 231: Loch
- 240: Klebstoff
- 400: Zugspanner
- 410: erstes Ende
- 411: Knoten
- 412: Schlaufe
- 420: zweites Ende
- 421: Knoten
- 422: Schlaufe
- 423: Unterlegscheibe
- 441: Schlitz
- 500: Spannwerkzeug
- 510: erstes Ende
- 520: zweites Ende
- 521: Anschluss
- 530: Gewindestange
- 540: Abschnitt
- 541: Schlitz
- 550: Haken
- 600: Stab

## Patentansprüche

1. Verfahren zum Herstellen eines Windenergieanlagen-Rotorblattes (200), welches eine erste und zweite Halbschale (210, 220) aufweist, mit den Schritten:
Herstellen der ersten Halbschale (210) und der zweiten Halbschale (220),
Vorsehen eines Klebewinkels (230) mit einer Mehrzahl von Löchern (231) zum Verbinden der ersten und zweiten Halbschale (210, 220), wenn diese beiden aufeinander platziert sind,
Verkleben eines Abschnitts des Klebewinkels (230) mit der ersten oder zweiten Halbschale (210, 220) mittels eines Klebers (240),
Einführen von ersten Enden (410) einer Mehrzahl von Zugspannern (400) durch die Löcher (231) in dem Klebewinkel (230),
Vorsehen von ersten Knoten (411) oder Schlaufen (412) an den ersten Enden (410) der Zugspanner (400),
Einführen von zweiten Enden (420) der Mehrzahl von Zugspannern (400) durch Löcher in der ersten oder zweiten Halbschale (210, 220), so dass die zweiten Enden (420) von außerhalb der ersten und zweiten Halbschale zugänglich sind,
Vorsehen von zweiten Knoten (421) oder Schlaufen (422) an den zweiten Enden (420) der Zugspanner (400), und
Vorspannen der zweiten Enden (420) der Zugspanner (400) mittels Spannwerkzeuge (500) außerhalb der ersten und zweiten Halbschalen (210, 220) bis der Kleber (240) ausreichend ausgehärtet ist.

2. Verfahren nach Anspruch 1, wobei
die Zugspanner (400) als Gewebeband, insbesondere als Umreifungsband ausgestaltet ist.

3. Verfahren nach Anspruch 1 oder 2, wobei
die sich außerhalb der ersten und zweiten Halbschale (210, 220) befindlichen Teile der zweiten Enden (420) der Zugspanner (400) entfernt werden, wenn der Klebstoff (240) ausreichend ausgehärtet ist.

4. Verwendung eines Gewebebandes als Zugspanner, um einen Klebewinkel (230) zwischen einer ersten und einer zweiten Halbschale (210, 220) eines Windenergieanlagen-Rotorblatt (200) beim Verkleben der ersten und zweiten Halbschale auf Spannung bezüglich der beiden Halbschalen zu halten, bis ein Klebstoff (240) zwischen dem Klebewinkel (230) und der ersten und zweiten Halbschale (210, 220) ausreichen ausgehärtet ist.

5. Windenergieanlagen-Rotorblatt (200), mit
einer ersten und einer zweiten Halbschale (210, 220),
einem Klebewinkel (230) an der ersten und zweiten Halbschale (210, 220),
Klebstoff (240) zwischen dem Klebewinkel (230) und der ersten und zweiten Halbschale (210, 220), und
einer Mehrzahl von Zugspannern (400) mit ersten und zweiten Enden (410, 420),
wobei die ersten Enden (410) über den Klebewinkel (230) hinausragen,
wobei die zweiten Enden (420) über die erste und zweite Halbschale nach außen hinausragen.

6. Windenergieanlagen-Rotorblatt (200) nach Anspruch 5, wobei
die Zugspanner (400) als Gewebeband, insbesondere als Umreifungsband, ausgestaltet sind.
